(19) Europäisches Patentamt
European Patent Office
Office européen des brevets

(11) EP 0 534 373 B1

(12) **EUROPEAN PATENT SPECIFICATION**

(45) Date of publication and mention
of the grant of the patent:
**04.03.1998 Bulletin 1998/10**

(51) Int Cl.6: **G11B 7/12**, G11B 7/135,
G11B 11/10

(21) Application number: **92116204.6**

(22) Date of filing: **22.09.1992**

(54) **Optical pickup device**

Optisches Wiedergabegerät

Appareil pour la reproduction optique

(84) Designated Contracting States:
**DE GB**

(30) Priority: **27.09.1991 JP 248721/91**

(43) Date of publication of application:
**31.03.1993 Bulletin 1993/13**

(73) Proprietor: **SHARP KABUSHIKI KAISHA**
**Osaka 545 (JP)**

(72) Inventor: **Yokota, Taizo**
**Higashihiroshima-shi, Hiroshima 729-15 (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**EP-A- 0 123 048**   **EP-A- 0 195 657**
**EP-A- 0 244 827**   **EP-A- 0 309 686**
**EP-A- 0 426 248**   **US-A- 5 015 835**

- **PATENT ABSTRACTS OF JAPAN vol. 12, no. 303**
  **(P-746)(3150) 18 August 1988 & JP-A-63 074 149**
- **PATENT ABSTRACTS OF JAPAN vol. 15, no. 16**
  **(P-1152) 14 January 1991 & JP-A-22 59 702**
- **PATENT ABSTRACTS OF JAPAN vol. 15, no. 360**
  **(P-1250) 11 September 1990 & JP-A-31 37 841**

## Description

FIELD OF THE INVENTION

The present invention relates to an optical pickup device designed for a magneto-optical recording/reproducing apparatus and the like.

BACKGROUND OF THE INVENTION

In magneto-optical recording/reproducing apparatuses, information is recorded by utilizing differences in magnetization direction on a magneto-optical recording medium mainly composed of a magnetic thin film with perpendicular magnetization. On the other hand, information is reproduced through a so-called magnetic Kerr effect. Namely, a polarization plane of reflected light is rotated in mutually opposite directions depending on the magnetization direction at a portion on the magneto-optical recording medium is oriented upward or downward. Generally, when reproducing information with the magneto-optical recording apparatus, a differential detection is further carried out on each reproduced signal after being detected according to the differences in magnetization direction.

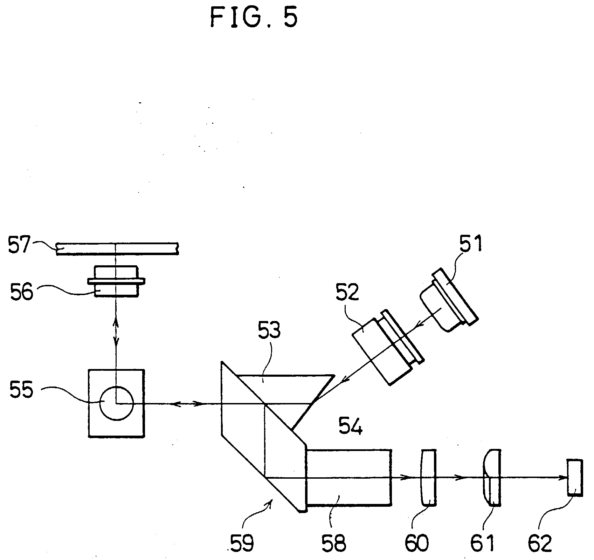

Fig. 5 shows an example of an optical pickup designed for magneto-optical recording/reproducing apparatuses.

A linearly polarized beam of light emitted from a semiconductor laser 51 as a light generation means is converted into a parallel beam of light by a collimating lens 52. It is directed to a shaping prism 53 where an intensity distribution thereof is adjusted so that a circular spot on the magneto-optical disk 57 is irradiated. Thereafter, the light beam is transmitted through a polarizing beam splitter 54 and reflected by a 45° mirror 55. Then, the reflected light is focused on the magneto-optical disk 57 by an objective 56.

A polarization plane of the light reflected from the magneto-optical disk 57 slightly rotates either positive or negative direction depending on a magnetization direction of the magneto-optical disk 57. The reflected light containing information on the magneto-optical disk 57 is directed to a polarizing beam splitter 54 through the mirror 55. Then, only a polarizing beam thereof having a specific oscillation direction is further directed to a Wollaston prism 58 and split into three beams of light. After passing through a spot lens 60 and a cylindrical lens 61, the beams of light are focused on a six-segments photodetector 62. Here, the shaping prism 53, the polarizing beam splitter 54 and the Wollaston prism 58 are integrated into a single package as a compound prism 59.

Among the three beams of light split by the Wollaston prism 58, a central beam of light is used for obtaining a focus error signal and a tracking error signal, and two side-beams of light are used for a differential detection of a magneto-optical signal.

The discussed optical pickup device is provided with optical components having various functions apart from the light generation means and the light receiving means. However, since all of the optical components are not integrated, it takes a long time for positioning and fixing of each component. Moreover, since an optical fluctuation occurs due to a distortion of a housing for fixing each component, etc., it is difficult to maintain mechanical functions of the magneto-optical pickup device for long time, thereby raising the cost of the device. Respective high unit costs of the Wollaston prism 58 and the polarizing beam splitter 54 for detecting the magneto-optical signal (polarization component) also raise the cost of the device.

To counteract this, a polarized hologram which permits a detection of the polarization component by a diffraction element has been developed with an expectation for an application to the magneto-optical pickup device. However, in order to achieve the detection of the polarization component by the polarized hologram, it needs to set an angle with respect to an optical axis satisfy the Bragg rule. This presents the problem by making the configuration of the optical pickup device complex.

Document EP-A-0 123 048 discloses the positioning of holograms on a glass layer of an holographic optical head. Therefore, this document shows only an optical pickup device comprising a plurality of diffraction elements which elements are laminated together.

Document JP-A-63 074 149 discloses an optical pickup device comprising light generation means for emitting a linearly polarized light to a recording medium; a first diffraction element for diffracting a first order reflected from the recording medium; a second diffraction element for separating a first diffracted light from said first diffraction element into a transmitted light and a first order diffracted light according to polarization components of the first order diffracted light; and light receiving means for receiving the transmitted light and the first order diffracted light from said second diffraction element and converting them into electric signals. In this document, the second grating is a hologram being fixed on both end portions within a metallic casing.

Document EP-A-0 195 657 discloses an optical pickup comprising two holograms which are spaced apart or which are laminated as shown in Fig. 13. Document EP-A-0 195 657 shows that the maximum efficiency of a diffraction element is reached when the incident angle is the Bragg angle.

Document JP-A-2 259 702 discloses only an optical element, namely that two gratings are formed on different faces of a flat plate substrate.

Document EP-A-0 309 689 shows an optical pickup comprising a hologram to split a laser beam, wherein said laser beam is incident perpendicularly on said hologram.

## SUMMARY OF THE INVENTION

An object of the present invention is to provide a simplified optical pickup device that can be manufactured through a simple manufacturing process.

In order to achieve the above object, the optical pickup device in accordance with the present invention comprises the features of claim 1.

According to this arrangement, since the first and the second diffraction elements are laminated together, the adjustment in the optical axis is no longer required.

For a fuller understanding of the nature and advantages of the invention, reference should be made to the ensuing detailed description taken in conjunction with the accompanying drawings.

## BRIEF DESCRIPTION OF THE DRAWINGS

Figs. 1 through 3 show an embodiment of the present invention.

Fig. 1 is a schematic side view illustrating a configuration of an optical pickup device.

Fig. 2 is an explanatory view illustrating a diffraction by the diffraction element of Fig. 1.

Fig. 3 is an exploded view in perspective of the optical pickup device of Fig. 1.

Fig. 4 showing a second embodiment of the present invention is a schematic side view illustrating a configuration of an optical pickup device.

Fig. 5 showing a prior art is a schematic side view illustrating a configuration of an optical pickup device.

## DESCRIPTION OF THE EMBODIMENTS

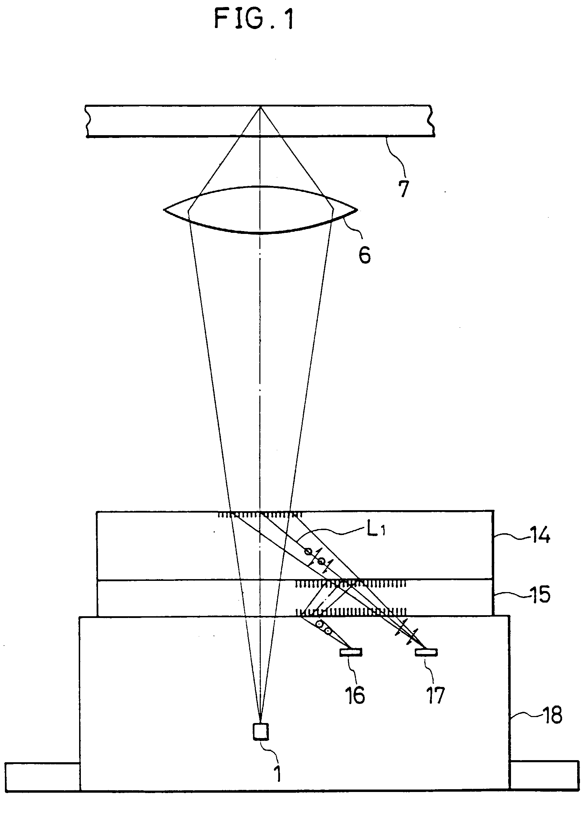

A first embodiment of the present invention will be described hereinbelow with reference to Fig. 1 through Fig. 3.

As shown in a schematic side view of Fig. 1, an optical pickup device of the present embodiment is provided with a semiconductor laser 1 (light generation means) for emitting a linearly polarized laser beam; an objective 6 for focusing the laser beam on the magneto-optical disk 7 (magneto-optical recording medium); a diffraction element 14 (a first diffraction element) for diffracting a reflected light from the magneto-optical disk 7; a diffraction element 15 (a second diffraction element) for separating a + first order diffracted light $L_1$ obtained from the diffraction element 14 according to polarization components; and light receiving elements 16 and 17 (light receiving means) for receiving the light beams separated by the diffraction element 15.

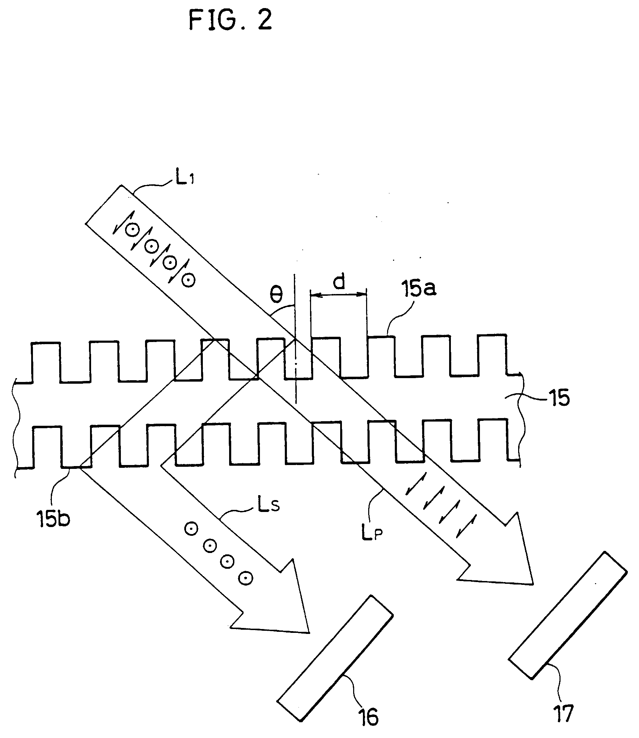

As shown in Fig. 2, the + first order diffracted light $L_1$ is incident on the diffraction element 15 at a predetermined angle of incidence. Here, the angle of incidence is set equal to the Bragg angle $\theta$ of the diffraction element 15. The Bragg angle $\theta$ is determined by $2d \sin\theta = \lambda$ where d represents a grating pitch of the diffraction grating 15a formed on the upper surface of the diffrac-

tion element 15, and $\lambda$ represents the wave-length of the laser beam.

Further, a direction of the grating formed on the diffraction element 15 is set to have an angle of 45° with respect to a polarization direction of the original laser beam. In this way, a P-polarized component $L_p$ of the + first order diffracted light $L_1$ is transmitted through the diffraction element 15, whereas, a S-polarized component $L_s$ is diffracted therefrom. In other words, the polarization component of the + first order diffracted light $L_1$ can be separated. Here, the P-polarized component $L_p$ is a polarized component whose polarization plane includes a grating vector; whereas, the S-polarized component is a polarized component whose polarization plane forms a right angle with respect to the grating vector.

On the lower surface of the diffraction element 15 of the present embodiment, formed is a diffraction grating 15b having the same grating pitch as that of the diffraction grating 15a formed on the upper surface. For this reason, the P-polarized component $L_p$ is transmitted through the lower surface of the diffraction element 15; whereas, S-polarized component $L_s$ is further diffracted therefrom. As a result, the S-polarized component $L_s$ is projected in the same direction as the P-polarized component $L_p$.

The P-polarized component $L_p$ transmitted through the diffraction element 15 is directed to the light receiving element 17. On the other hand, the S-polarized component $L_s$ diffracted from the diffraction gratings 15a and 15b is directed to the light receiving element 16. In the light receiving elements 16 and 17, a photoelectric conversion is carried out. In this way, a magneto-optical signal is obtained from the difference in the resulting electric signals.

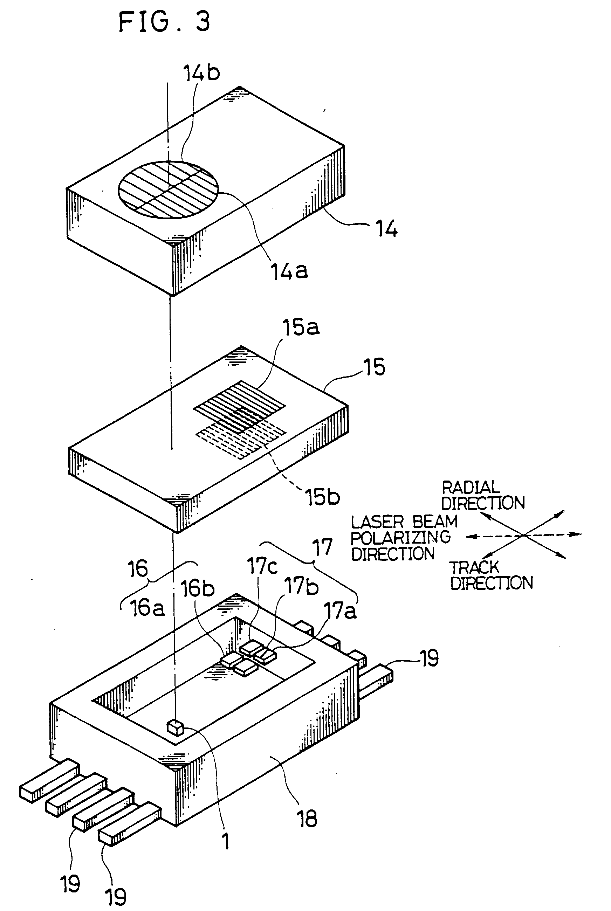

As shown in the exploded view of Fig. 3, the light receiving element 16 is divided into light detection units 16a and 16b, and the light receiving element 17 is divided into light detection units 17a, 17b and 17c. Here, the light receiving elements 16 and 17 are disposed within a single package 18 together with the semiconductor laser 1. Further, connection terminals 19 are attached to the side surfaces of the package 18.

With the above arrangement, a laser beam from the semiconductor laser 1 is focused on the magneto-optical disk 7 by the objective 6. On the other hand, the reflected light from the magneto-optical disk 7 is further diffracted from the diffraction element 14 after being converged by the objective 6. On a surface of the diffraction element 14, formed are diffraction gratings 14a and 14b having mutually different grating pitches from one another. A dividing line separating the diffraction grating 14a from the diffraction grating 14b is parallel to the track direction of the magneto-optical disk 7.

The P-polarized component $L_p$ of the + first order diffracted light $L_1$ diffracted from the diffraction grating 14a is transmitted through the diffraction element 15, and focused on the division line which separates the light receiving unit 17a from the light receiving unit 17b of the light receiving element 17. On the other hand, the S-polarized component $L_s$ is diffracted from the diffraction element 15 and converged on the light receiving unit 16a of the light receiving element 16.

The P-polarized component $L_p$ of the + first order diffracted light $L_1$ diffracted from the diffraction grating 14b is transmitted through the diffraction element 15, and focused on the light receiving unit 17c of the light receiving element 17. On the other hand, the S-polarized component $L_s$ is diffracted from the diffraction element 15 and converged on the light receiving unit 16b of the light receiving element 16.

A focus error signal FES, a radial error signal RES and a magneto-optical signal MOS can be derived from the following equations, where $S_1$ and $S_2$ respectively represent electric signals obtained from the light receiving units 16a and 16b, and $S_3$, $S_4$ and $S_5$ respectively represent electric signals obtained from the light receiving units 17a, 17b and 17c.

$$FES = S_3 - S_4; \text{ [Foucault's method]}$$

$$RES = (S_1 + S_3 + S_4) - (S_1 + S_5); \text{ [push-pull method]}$$

$$MOS = (S_1 + S_2) - (S_3 + S_4 + S_5);$$

[differential detection method]

As described, the optical pickup device of the present embodiment is arranged such that the diffraction angle of the diffraction element 14 is equal to the Bragg angle of the diffraction element 15. In this way, an optical axis is easily adjusted between the diffraction element 14 and the diffraction element 15. Moreover, if the diffraction element 14 and the diffraction element 15 are laminated together, the adjustment in the optical axis is no longer required.

Further, the diffraction gratings 15a and 15b are set to have the same grating pitches, respectively formed on the upper and the lower surfaces of the diffraction element 15, so that the P-polarized component $L_p$ and the S-polarized component $L_s$ are projected in the same direction. In this way, the light receiving element 16 and the light receiving element 17 can be closely disposed from one another. This enables the light receiving elements 16 and 17 to be integrated into a single chip. In addition, the light receiving element 16 and the light receiving element 17 may be disposed at positions slightly away from one another, however, in such a case, the diffraction grating 15b is not necessarily provided.

Furthermore, since the semiconductor laser 1 and the light receiving elements 16 and 17 are all disposed within the single package 18, the number of the components can be reduced, at the same time, the optical pickup device is improved in terms of its environmental resistance. Additionally, by laminating the diffraction element 14, the diffraction element 15 and the package 18 together, the simplified optical pickup device can be obtained.

In addition, several thousands of the diffraction elements 14 and 15 can be manufactured on a piece of glass wafer like the case of IC (Integrated Circuit), and thus the low unit costs of diffraction elements 14 and 15 permit to reduce the cost of the optical pickup device.

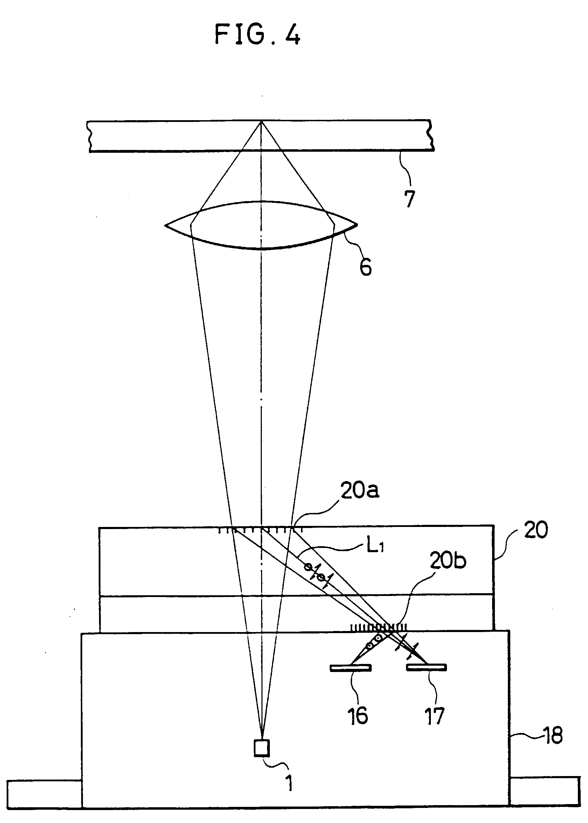

A second embodiment of the present invention is described hereinbelow, referring to Fig. 4. For the sake of convenience, members having the same function as in the aforementioned embodiment will be designated by the same code and their description will be omitted.

As shown in Fig. 4, an optical pickup device of the present invention differs from that of the previous embodiment in that the diffraction element 14 and the diffraction element 15 are integrated into a single diffraction element 20. More concretely, the diffraction element 20 includes a diffraction grating 20a that corresponds to the diffraction gratings 14a and 14b of the previous embodiment, formed on the surface facing the magneto-optical disk 7 of a glass or plastic substrate. On the other surface of the substrate facing the semiconductor laser 1, formed is a diffraction grating 20b that corresponds to the diffraction grating 15a of the previous embodiment.

According to the above arrangement, the focus error signal FES, the radial error signal RES and the magneto-optical signal MOS can be derived through the same way as the previous embodiment. In addition, since the diffraction element 20 is constituted of a piece of substrate, compared with the arrangement of the previous embodiment wherein the two diffraction elements 14 and 15 need to be laminated, the manufacturing process of the optical pickup device can be simplified.

In addition, a shaping prism is not required in the discussed preferred embodiments. Therefore, it is omitted. This is because the employed semiconductor laser 1 has a far field pattern whose asymmetry is substantially 2: 1.

## Claims

1.   An optical pickup device comprising:

light generation means (1) for emitting a linearly polarized light to a recording medium (7); a first diffraction element (14) for diffracting a first order reflected from the recording medium (7), said linearly polarized light being incident perpendicularly on said first diffraction element (14), and said linearly polarized light being transmitted through said first diffraction element (14) to a magneto-optical recording medium (7) that reflects said light as reflected light to said first diffraction element (14), said first diffraction element being disposed such that the reflected light is perpendicularly incident thereon;

a second diffraction element (15) for separating a first diffracted light from said first diffraction element (14) into a transmitted light and a first order diffracted light according to polarization components of the first order diffracted light;

light receiving means (16, 17) for receiving the transmitted light and the first order diffracted light from said second diffraction element (15) and converting them into electric signals; and wherein

grating pitches (14a, 14b, 15a, 15b) of said first and second diffraction elements (14, 15) are set so that an angle of incidence of the first order diffracted light that is incident on said second diffraction element (15) from said first diffraction element (14) is equal to a Bragg angle of said second diffraction element (15),

the gratings of said first and second diffraction elements (14, 15) are respectively formed in surfaces of glass or plastic substrates;

the substrates having the gratings formed in the surfaces thereof are laminated; and

said second diffraction element (15) is parallel to said first diffraction element (14).

2. The optical pickup device as set forth in claim 1, wherein the grating of said second diffraction element (15) is formed on both sides of one of the substrates.

3. The optical pickup device as set forth in claim 1 or 2, wherein said light receiving means (16, 17) includes respective light receiving units for receiving the transmitted light and the first order diffracted light from said second diffraction element (15).

4. The optical pickup device as set forth in claim 3, wherein said light generation means (1) and said light receiving means (16, 17) are disposed within a single package.

5. The optical pickup device as set forth in claim 4, wherein said first diffraction element (14), said second diffraction element (15) and the package are laminated in this order.

6. The optical pickup device as set forth in claim 2, wherein the grating formed on an upper surface of the substrate and the grating formed on a lower surface of the substrate have the same grating pitch so that the grating formed in the upper surface of the substrate separates the first diffracted light from said first diffraction element (14) into the transmitted light and the first order diffracted light according to the polarization components of the first order diffracted light and that the grating formed on the lower surface of the substrate diffracts the first diffracted light from the grating in the upper surface to a direction of the transmitted light from the grating on the upper surface.

7. The optical pickup device as set forth in claim 1, wherein the grating of said first diffraction element (14) is formed in the upper surface of said substrates, whereas, the grating of said second diffraction element (15) is formed in the lower surface of the substrates.

8. The optical pickup device as set forth in claim 7, wherein said light generation means (1) and said light receiving means (16, 17) are disposed in a single package, and the package and the substrate having said first and second diffraction elements (14, 15) are laminated.

**Patentansprüche**

1. Optische Abtastvorrichtung mit:

- einer Lichterzeugungseinrichtung (1) zum Emittieren von linear polarisiertem Licht auf einen Aufzeichnungsträger (7);
- einem ersten Beugungselement (14) zum Beugen von am Aufzeichnungsmedium (7) reflektiertem Licht mit 1. Ordnung, wobei das linear polarisierte Licht rechtwinklig auf das erste Beugungselement (14) fällt und es durch dieses erste Beugungselement (14) zum magnetooptischen Aufzeichnungsträger (7) hindurchgestrahlt wird, der dieses Licht als Reflexionslicht zum ersten Beugungselement (14) reflektiert, wobei das erste Beugungselement so angeordnet ist, dass das reflektierte Licht rechtwinklig auf es fällt;
- einem zweiten Beugungselement (15) zum Aufteilen eines ersten, am ersten Beugungselement (14) gebeugten Lichtstrahls in Transmissionslicht und Beugungslicht 1. Ordnung entsprechend Polarisationskomponenten des Beugungslichts 1. Ordnung;
- einer Lichtempfangseinrichtung (16, 17) zum Empfangen des Transmissionslichts und des Beugungslichts 1. Ordnung vom zweiten Beugungselement (15) und zum Umsetzen derselben in elektrische Signale;

wobei

- die Gitterstrichweiten (14a, 14b, 15a, 15b) des ersten und zweiten Beugungselements (14, 15) so eingestellt sind, dass der Einfallswinkel des Beugungslichts 1. Ordnung, wie es auf das zweite Beugungselement (15) vom ersten Beugungselement (14) her fällt, dem Braggwinkel des zweiten Beugungselements (15) entspricht;

- die Gitter des ersten und zweiten Beugungselements (14, 15) jeweils in Oberflächen von Glas- oder Kunststoffsubstraten ausgebildet sind;
- die Substrate mit den in ihren Oberflächen ausgebildeten Gittern zusammenlaminiert sind und
- das zweite Beugungselement (15) parallel zum ersten Beugungselement (14) verläuft.

2. Optische Abtastvorrichtung nach Anspruch 1, bei der das Gitter des zweiten Beugungselements (15) auf beiden Seiten eines der Substrate ausgebildet ist.

3. Optische Abtastvorrichtung nach Anspruch 1 oder 2, bei der die Lichtempfangseinrichtung (16, 17) jeweilige Lichtempfangseinheiten zum Empfangen des Transmissionslichts und des Beugungslichts 1. Ordnung vom zweiten Beugungselement (15) aufweist.

4. Optische Abtastvorrichtung nach Anspruch 3, bei der die Lichterzeugungseinrichtung (1) und die Lichtempfangseinrichtung (16, 17) innerhalb eines einzelnen Gehäuses angeordnet sind.

5. Optische Abtastvorrichtung nach Anspruch 4, bei der das erste Beugungselement (14), das zweite Beugungselement (15) und das Gehäuse in dieser Reihenfolge zusammenlaminiert sind.

6. Optische Abtastvorrichtung nach Anspruch 2, bei der das auf der Oberseite des Substrats ausgebildete Gitter und das auf der Unterseite des Substrats ausgebildete Gitter dieselbe Gitterstrichweite aufweisen, so dass das an der Oberseite des Substrats ausgebildete Gitter das Beugungslicht 1. Ordnung vom ersten Beugungselement (14) in Transmissionslicht und Beugungselement 1. Ordnung entsprechend Polarisationskomponenten des Beugungslichts 1. Ordnung auftrennt, und das an der Unterseite des Substrats ausgebildete Gitter das erste Beugungslicht vom Gitter an der Oberseite in die Richtung des Transmissionslichts vom Gitter an der Oberseite beugt.

7. Optische Abtastvorrichtung nach Anspruch 1, bei der das Gitter des ersten Beugungselements (14) an der Oberseite der Substrate ausgebildet ist, wohingegen das Gitter des zweiten Beugungselements (15) an der Unterseite der Substrate ausgebildet ist.

8. Optische Abtastvorrichtung nach Anspruch 7, bei der die Lichterzeugungseinrichtung (1) und die Lichtempfangseinrichtung (16, 17) in einem einzelnen Bauteil angeordnet sind und das Bauteil und das Substrat mit dem ersten und zweiten Beugungselement (14, 15) zusammenlaminiert sind.

**Revendications**

1. Dispositif de captage optique comprenant :

des moyens de génération de lumière (1) pour émettre une lumière polarisée de façon linéaire vers un milieu d'enregistrement (7) ;
un premier élément de diffraction (14) pour diffracter un premier ordre réfléchi depuis le milieu d'enregistrement (7), ladite lumière polarisée de façon linéaire étant incidente perpendiculairement sur ledit premier élément de diffraction (14), et ladite lumière polarisée de façon linéaire étant transmise à travers ledit premier élément de diffraction (14) vers un milieu d'enregistrement magnéto-optique (7) qui réfléchit ladite lumière sous la forme de lumière réfléchie vers ledit premier élément de diffraction (14), ledit premier élément de diffraction étant disposé de telle sorte que la lumière réfléchie soit incidente perpendiculairement sur celui-ci ;
un deuxième élément de diffraction (15) pour séparer une première lumière diffractée dudit premier élément de diffraction (14) en une lumière transmise et une lumière diffractée du premier ordre en fonction de composantes de polarisation de la lumière diffractée du premier ordre ;
des éléments de réception de lumière (16, 17) pour recevoir la lumière transmise et la lumière diffractée du premier ordre depuis ledit deuxième élément de diffraction (15) et les convertir en signaux électriques ; et dans lequel :
des pas de réseau (14a, 14b, 15a, 15b) desdits premier et deuxième éléments de diffraction (14, 15) sont établis de telle sorte qu'un angle d'incidence de la lumière diffractée du premier ordre qui est incidente sur ledit deuxième élément de diffraction (15) depuis ledit premier élément de diffraction (14) soit égal à un angle de Bragg dudit deuxième élément de diffraction (15),
les réseaux desdits premier et deuxième éléments de diffraction (14, 15) sont respectivement formés dans des surfaces de substrats en verre ou en matière plastique ;
les substrats comportant les réseaux qui sont formés dans les surfaces de ceux-ci sont stratifiés ; et

ledit deuxième élément de diffraction (15) est parallèle audit premier élément de diffraction (14).

2.  Dispositif de captage optique selon la revendication 1, dans lequel le réseau dudit deuxième élément de diffraction (15) est formé sur les deux côtés de l'un des substrats.

3.  Dispositif de captage optique selon la revendication 1 ou 2, dans lequel lesdits moyens de réception de lumière (16, 17) comprennent des unités de réception de lumière respectives pour recevoir la lumière transmise et la lumière diffractée du premier ordre à partir dudit deuxième élément de diffraction (15).

4.  Dispositif de captage optique selon la revendication 3, dans lequel lesdits moyens de génération de lumière (1) et lesdits moyens de réception de lumière (16, 17) sont disposés à l'intérieur d'un boîtier unique.

5.  Dispositif de captage optique selon la revendication 4, dans lequel ledit premier élément de diffraction (14), ledit deuxième élément de diffraction (15) et le boîtier sont stratifiés, dans cet ordre.

6.  Dispositif de captage optique selon la revendication 2, dans lequel le réseau formé sur une surface supérieure du substrat et le réseau formé sur une surface inférieure du substrat ont le même pas de réseau, de telle sorte que le réseau formé dans la surface supérieure du substrat sépare la première lumière diffractée depuis ledit premier élément de diffraction (14) sous la forme de la lumière transmise et de la lumière diffractée du premier ordre en fonction des composantes de polarisation de la lumière diffractée du premier ordre, et que le réseau formé sur la surface inférieure du substrat diffracte la première lumière diffractée depuis le réseau dans la surface supérieure vers une direction de la lumière transmise depuis le réseau sur la surface supérieure.

7.  Dispositif de captage optique selon la revendication 1, dans lequel le réseau dudit premier élément de diffraction (14) est formé dans la surface supérieure desdits substrats, tandis que le réseau dudit deuxième élément de diffraction (15) est formé dans la surface inférieure des substrats.

8.  Dispositif de captage optique selon la revendication 7, dans lequel lesdits moyens de génération de lumière (1) et lesdits moyens de réception de lumière (16, 17) sont disposés dans un boîtier unique, et le boîtier et le substrat comprenant lesdits premier et deuxième éléments de diffraction (14, 15) sont stratifiés.

# FIG. 1

# FIG. 2

# FIG. 3

RADIAL DIRECTION

LASER BEAM POLARIZING DIRECTION

TRACK DIRECTION

# FIG. 4

FIG. 5

57
56
55
53
52
51
54
59    58    60    61    62